# EUROPEAN PATENT APPLICATION

(11) **EP 3 062 143 A1**
(43) Date of publication of application: **31.08.2016**
(21) Application number: 15181513.1
(22) Date of filing: 19.08.2015
(51) Int. Cl.: G02C 7/02, G02B 27/00

(54) **METHOD OF MANUFACTURING PLANO LENS FOR PREVENTING OPTICAL DISTORTION**

(30) Priority: 25.02.2015 KR 20150026228
(71) Applicant: Korea O.G.K CO. LTD., Gangwon-do 2 (KR)
(72) Inventor: Park, Soo An, 49 Seoul (KR)
(74) Representative: Dr. Weitzel & Partner

(57) **Abstract**

Disclosed herein is a method of manufacturing a plano lens for preventing optical distortion, which is capable of removing an angular difference caused by a spherical lens and minimizing prism action at a specific position, by modifying a refractive mechanism of a plane lens and applying the same to the spherical lens. The method includes a step of setting a normal line to a primary refracting surface of a spherical lens, a step of setting a normal line to a secondary refracting surface of the spherical lens, and a step of adjusting an R value such that the normal line to the primary refracting surface is parallel with the normal line to the secondary refracting surface.

## Description

### BACKGROUND OF THE INVENTION

### Field of the Invention

The present invention relates to a method of manufacturing a plano lens for preventing optical distortion, and more particularly to a method of manufacturing a plano lens for preventing optical distortion, which is adapted to provide stable optical performance of a plano lens.

### Description of the Related Art

In general, plano lenses applied to eyewear have optical factors such as prismatic power, refractive power, and resolving power. Among these optical factors, the worst problem encountered in the plano lenses is prism action.

Such prism action is a factor that increases the eye strain of a user, thereby disrupting the normal outdoor activities of the user.

Plano lenses are lenses which are worn by users having normal vision, and thus it is necessary to more precisely manage plano lenses than lenses worn by users having abnormal vision.

Korean Patent Publication No. 10-0540068 discloses a method of manufacturing a mold for production of an eyeglass lens having a hyperopia correction portion formed at the lower portion thereof, in particular, a method of manufacturing a mold for production of a plano lens having a hyperopia correction portion, which is formed at the lower portion thereof and has a half-moon shape.

As disclosed in the above patent document, the conventional method manufactures a glass mold by performing a primary mold processing process of processing a blank, which is glass to be processed, in the form of a non-prescription lens, a segment processing process of processing a segment having a prescription for hyperopia correction while the segment is fused to the lower side of the blank, a segment fusing process of fusing the segment to the lower side of the blank, and a final mold processing process in which the segment fused to the blank is processed according to the R value of a hyperopia correction portion and the unused surface of the segment is processed. In the method, the segment processing process includes a segment fixing process in which a circular segment is divided into two segments and the divided segments are fixed by a fixture such that the cut surfaces thereof are directed upward and are bonded with adhesive, a cut surface processing process in which the cut surfaces of the fixed segments are obliquely cut and polished using a grinder, a segment bonding process in which the cut surfaces of the divided segments are bonded with adhesive in the state of facing each other, a segment curve processing process in which the lower portion of the bonded segment is processed according to the R value of the blank and the upper portion thereof is processed according to the R value of the hyperopia correction portion, and a segment completion process in which the segment is completed by polishing the curve of the segment and separating the segment.

However, the above lens manufacturing method according to the related art is applied to a single lens. Accordingly, when the above method is applied to a double lens, the double lens is designed by a typical R2 calculation method. For this reason, there is a limit on a design for preventing prism action at a required specific position.

[Patent Document 1] Korean Patent Publication No. 10-0540068 (December 23, 2005)

### SUMMARY OF THE INVENTION

Therefore, the present invention has been made in view of the above problems, and it is an object of the present invention to provide a method of manufacturing a plano lens for preventing optical distortion, which is capable of removing an angular difference caused by a spherical lens and minimizing prism action at a specific position, by modifying a refractive mechanism of a plane lens and applying the same to the spherical lens.

In accordance with the present invention, the above and other objects can be accomplished by the provision of a method of manufacturing a plano lens for preventing optical distortion, including setting a normal line to a primary refracting surface of a spherical lens, setting a normal line to a secondary refracting surface of the spherical lens, and adjusting an R value such that the normal line to the primary refracting surface is parallel with the normal line to the secondary refracting surface.

In addition, the R value may be adjusted by adding factors, such as a curvature and a thickness of an outer spherical surface of the lens, to a refractive index for each lens.

In addition, a highly curved (6C or 8C) lens may be applied to sports eyewear.

In addition, a decentered lens, in which a PD value is not designed at an optical center thereof, may be applied to the present invention.

In addition, the method may be applied to both horizontal and vertical lenses.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a flowchart illustrating a method of manufacturing a plano lens for preventing optical distortion according to an embodiment of the present invention;
FIG. 2 is a view illustrating a path of light in a plane lens;
FIGS. 3 and 4 are views illustrating a path of light in a spherical lens; and
FIG. 5 is a view illustrating an amount of eccentricity between the optical center and the geometric center of a typical sun lens.

### DETAILED DESCRIPTION OF THE INVENTION

Reference will now be made in detail to embodiments, examples of which are illustrated in the accompanying drawings. However, the present invention may be embodied in many different forms and should not be construed as limited to the embodiments set forth herein. In certain embodiments, detailed descriptions of functions and constructions well known in the art may be omitted to avoid unnecessarily obscuring the gist of the present invention.

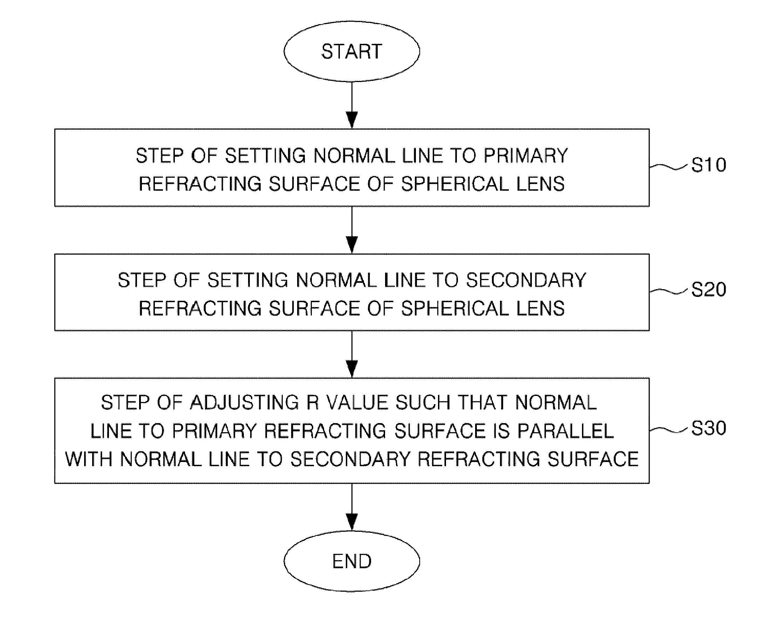

FIG. 1 is a flowchart illustrating a method of manufacturing a plano lens for preventing optical distortion according to an embodiment of the present invention.

As illustrated in FIG. 1, the method of manufacturing a plano lens for preventing optical distortion according to the embodiment of the present invention includes a step of setting a normal line to a primary refracting surface of a spherical lens, a step of setting a normal line to a secondary refracting surface of the spherical lens, and a step of adjusting an R value such that the normal line to the primary refracting surface is parallel with the normal line to the secondary refracting surface. The R value may be adjusted by adding factors, such as the curvature and thickness of the outer spherical surface of a lens, to the refractive index for each lens. A highly curved (6C or 8C) lens may be applied to sports eyewear. A decentered lens, in which a PD value is not designed at the optical center thereof, may be applied to the present invention. The method is preferably applied to both horizontal and vertical lenses.

Lenses used for eyewear are generally classified into a plane lens and a spherical lens. In other words, the lenses are classified into a spherical lens and an aspherical lens. Optical distortion is present in the spherical lens due to the spherical surface of the lens.

Prism action does not occur in the plane lens. However, regardless of whether the spherical lens has a cylindrical or spherical surface, light is primarily refracted, due to a difference between refractive indexes of lens materials, when it is incident on the spherical surface of the lens, and is then secondarily refracted when it is emitted from the spherical surface of the lens.

The refraction of light occurs on the basis of a normal line to the surface at the point of incidence. In this case, an angle of refraction follows the law of refraction (n₁sinθ₁ = n₂sinθ₂).

The prism action does not occur in the plane lens even though the lens is placed horizontally with respect to the angle of incidence or is inclined at a specific angle.

The reason is because light is emitted through the lens at the same angle as the angle of incidence of light in the state in which a normal line to the primary refracting surface of the plane lens is parallel with a normal line to the secondary refracting surface of the plane lens.

In the typical spherical lens, the angle of incidence of light differs from the angle of light after light passes through the lens since the normal line to the primary refracting surface of the lens is not parallel with the normal line to the secondary refracting surface of the lens.

The present invention provides a technology that removes an angular difference caused by a spherical lens by modifying a refractive mechanism of a plane lens and applying the same to the spherical lens.

This technology may be accomplished by adjusting the R value of the inner surface of the lens. Particularly, the lens has to be designed in consideration of a refractive index for each lens and factors such as the curvature and thickness of the outer spherical surface of the lens.

A highly curved (6C or 8C) lens is applied to sports eyewear in consideration of design factors.

In this case, typical prescription eyeglasses may not have a PD value which is designed at the optical center thereof. In addition, when eyeglasses are worn, particularly by Asians, the fitting feeling is deteriorated due to the basic curvature value of the lens, which is 8C, thereby increasing stress on the temples.

To resolve this, the present invention designs a decentered lens, the basic curvature of which is maintained to be 6C, while realizing the fitting feeling of 7C or 8C. As a result, it is possible to prevent the deterioration of the fitting feeling and overcome design limitations.

In addition, the present invention proposes a design for horizontal and vertical lenses.

The present invention may compensate for an optical problem at a specific position (PD).

The exemplary embodiment of the present invention will be described below with reference to the accompanying drawings.

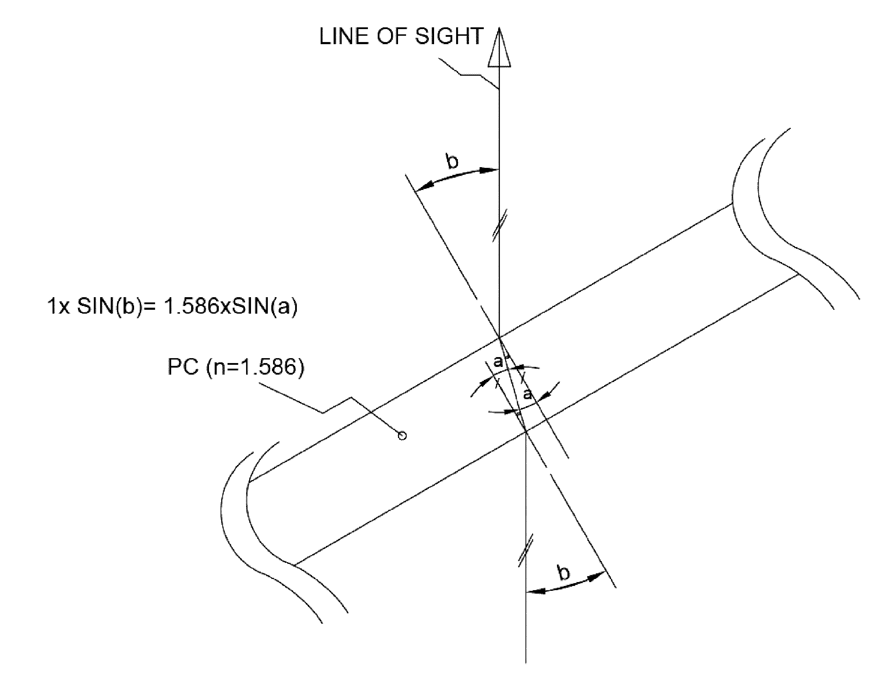

FIG. 2 is a view illustrating a path of light in the plane lens.

In the plane lens, vertical incident light is primarily and secondarily refracted, and is then emitted vertically therefrom. The angle of incidence "b" relative to the normal line to a primary refracting surface P1 is refracted by the angle of "a" due to a refractive index of a lens material, and has the same angle as the angle of incidence at a secondary refracting surface. Angles of refraction and incidence in the lens are equal to each other because the normal line to the primary refracting surface is parallel with the normal line to the secondary refracting surface.

When the angle of refraction is equal to the angle of incidence at the secondary refracting surface P2, the angle of incidence at the primary refracting surface is equal to the angle of refraction at the secondary refracting surface. Thus, the vertical incident light is vertically refracted and emitted. As described above, this result is achieved because the normal lines L4 and L5 to the primary and secondary refracting surfaces are parallel with each other.

The present invention applies the optical structure of the plane lens to the spherical lens, and thus the spherical lens may have the same refraction properties as the plane lens.

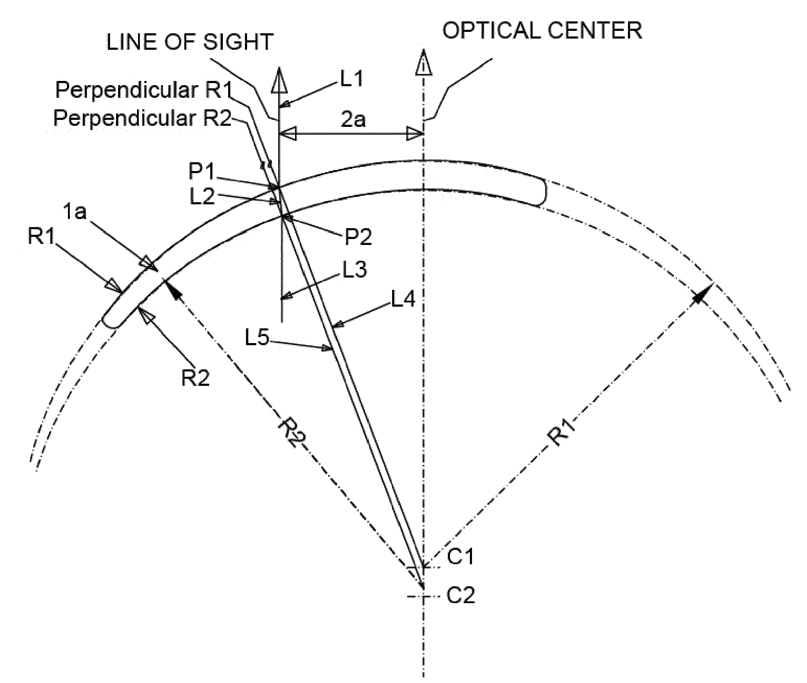

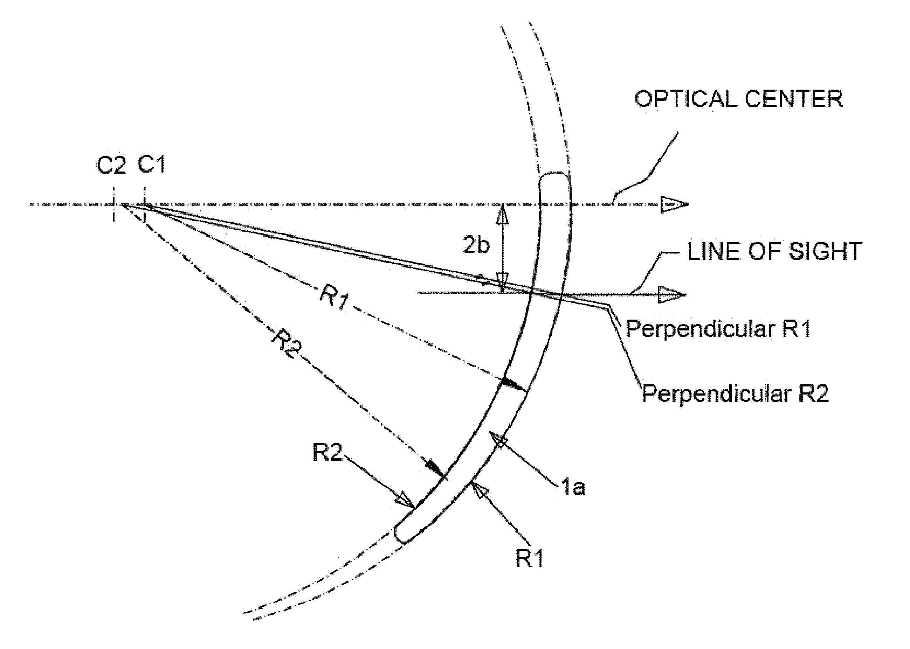

FIGS. 3 and 4 are views illustrating a path of light in the spherical lens. The optical structure is applied to the spherical lens as follows.
1) A normal line to a given R1 (where R1 is a value for the design factor of a frame) is first drawn.
2) Similarly to the plane lens, angles of incidence and refraction at a primary refracting surface P1 are calculated, and a refractive line L2 is drawn on the lens.
3) The thickness of the lens is calculated based on a typical PD. A primary normal line L4 and a secondary normal line L5, which is parallel therewith, are arranged according to the calculated thickness.
4) A point C2, at which the arranged secondary normal line L5 meets an optical center, is determined.
5) A circle having a radius set as the distance between the point C2 and the point at which the refractive line, according to the calculated thickness at the PD position, intersects the secondary normal line, is drawn.
6) The circle is an inner surface R2 of the lens.
7) As a result, the inner surface R2 of the spherical lens is designed to have the same optical properties as the plane lens.

FIG. 4 is a view illustrating a vertical lens. The vertical lens is manufactured by the method illustrated in FIG. 3. However, a vertical PD (line of sight) position is determined according to the angle of forward inclination of the frame to which the lens is mounted.

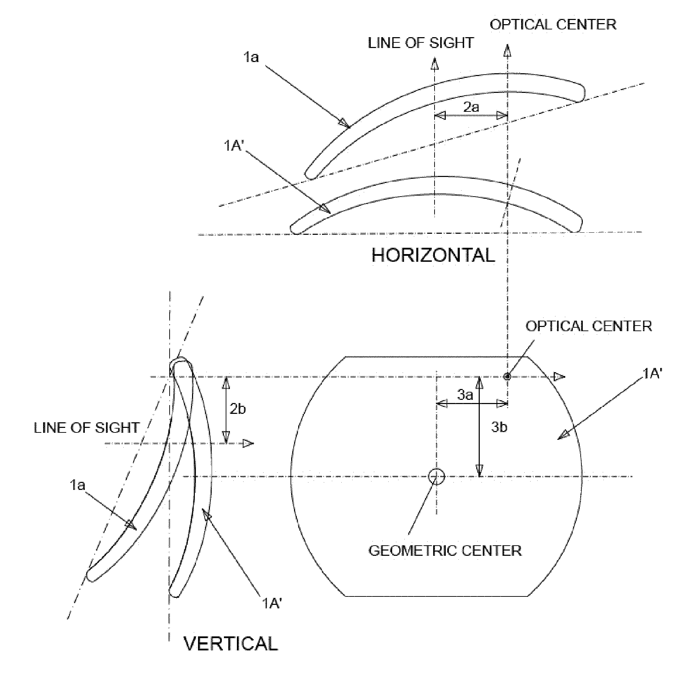

FIG. 5 is a view illustrating an amount of eccentricity between the optical center and the geometric center of a typical sun lens.

First, when the frame design and the R1 value of a lens are determined, the angle at which a lens 1a is placed is determined.

The optical center of the lens completed by the above R2 design has to be parallel with the line of sight, so that optical distortion is low.

Sine lens components are separately designed, it is necessary to design the geometric center and the actual optical center of the lens.

This process will be described in design order.

First, the R1 value of a circle 1a is determined. The region and maximum size of the lens and the like are determined in order to determine the design factors pertaining to the outer frame, the fitting and lens prescription of the wearer, and the region protected by the frame.

Secondarily, after the R1 value is determined, horizontal and vertical angles are designed for assembly with the frame of the lens. In this case, distance factors 2a and 2b may be determined.

Thirdly, an R2 value is determined in the above manner.

Fourthly, since the lens is manufactured using a separate mold, a separate lens design is completed based on the geometric center in the drawing. In this case, required factors 3a, 3b, and the like are determined.

The present invention may be applied to various lenses such as a glass lens and a plastic lens.

As is apparent from the above description, the method of manufacturing a plano lens for preventing optical distortion according to the present invention can remove an angular difference caused by the spherical lens and minimize prism action at a specific position, by modifying the refractive mechanism of the plane lens and applying the same to the spherical lens.

Although embodiments have been described with reference to a number of illustrative embodiments thereof, it should be understood that numerous other modifications and applications may be devised by those skilled in the art that will fall within the intrinsic aspects of the embodiments. More particularly, various variations and modifications are possible in concrete constituent elements of the embodiments. In addition, it is to be understood that differences relevant to the variations and modifications fall within the spirit and scope of the present invention defined in the accompanying claims.

## Claims

1. A method of manufacturing a plano lens for preventing optical distortion, comprising:
setting a normal line to a primary refracting surface of a spherical lens;
setting a normal line to a secondary refracting surface of the spherical lens; and
adjusting an R value such that the normal line to the primary refracting surface is parallel with the normal line to the secondary refracting surface,
wherein the R value is adjusted by adding factors, such as a curvature and a thickness of an outer spherical surface of the lens, to a refractive index for each lens, and a decentered lens is applied thereto, in which a PD value is not designed at an optical center thereof while a basic curvature of the lens is maintained to be 6C.

2. The method according to claim 1, wherein the method is applied to both horizontal and vertical lenses.
